# EUROPÄISCHE PATENTSCHRIFT

(11) **EP 2 783 613 B1**
(45) Veröffentlichungstag und Bekanntmachung des Hinweises auf die Patenterteilung: **11.05.2016**
(21) Anmeldenummer: 14159019.0
(22) Anmeldetag: 12.03.2014
(51) Int. Cl.: A47J 47/18, B65D 25/32, A47L 13/58

(54) **Eimer**
Pail
Seau

(30) Priorität: 28.03.2013 DE 102013103250
(43) Veröffentlichungstag der Anmeldung: 01.10.2014
(73) Patentinhaber: Leifheit AG, 56377 Nassau (DE)
(72) Erfinder: Fischer, Klaus-Jürgen, 56379 Holzappel (DE); Zens, Detlef, 57632 Burglahr (DE); May, Thorsten, 56379 Obernhof (DE)
(74) Vertreter: Tersteegen, Felix

(56) Entgegenhaltungen:
- DE-A1- 19 529 780
- DE-A1-102005 024 742
- US-A- 2 740 655

## Beschreibung

Die Erfindung betrifft einen Eimer nach dem Oberbegriff des Anspruchs 1.

Eimer dieser Art sind aus der DE 195 213 41 A1 bekannt. Hierbei handelt sich um einen rechteckigen Eimer, der einen Einsatz aufweist, in dem ein Feuchtwischer ausgepresst werden kann.

Der bekannte Eimer weist zwei gegenüberliegende Schmalseiten auf, die über Langseiten miteinander verbunden sind. Die Befestigung des Haltebügels ist hierbei an den Schmalseiten vorgesehen, wobei die Anlenkpunkte so positioniert sind, dass die virtuelle Linie zwischen diesen Anlenkpunkten durch eine Achse verläuft, die wiederum senkrecht durch den Schwerpunkt des Eimers verläuft.

Dies hat den Vorteil, dass der Eimer gerade herunter hängt und sich nicht infolge der Gewichtskraft schräg gestellt. Nachteilhaft hierbei ist jedoch die Tatsache, dass der Haltebügel die Öffnung des Eimers, da er quer über diese Öffnung verläuft, in aufgestelltem Zustand blockiert. Dieser Nachteil wird zusätzlich verstärkt, wenn die drehbare Anlenkung des Haltebügels genutzt wird, um einen Presseinsatz, der dann auf dem oberen Behälterrand aufliegt, zu verriegeln. In diesem Fall muss sich dieser Aufsatz bis zur virtuellen Verbindungslinie der Anlenkpunkte erstrecken, so dass durch den Aufsatz mehr als die Hälfte der Öffnung abgedeckt werden muss.

Bei den üblichen Wischsystemen wird aber zum einen eine Pressvorrichtung dauerhaft während des Gebrauchs im Eimer belassen, zum anderen muss aber eine Eintauchöffnung vorgesehen sein, durch die der benutzte Wischmopp in das im Eimer befindliche Wasser zum Spülen eingetaucht werden kann. Da diese Eintauchöffnung ebenfalls eine gewisse Größe aufweisen muss, damit der Wischmopp bequem eingefädelt werden kann, wird durch die Anlenkung des Haltebügels und die damit einhergehende Abdeckung der Eimeroberfläche eine Mindestgröße für den Eimer erforderlich, die wiederum für übliche Haushaltszwecke unpraktisch ist und zu Lagerproblemen führt.

Aus der EP 2545837 A1 ist ein weiteres Wischsystem bekannt, dass das oben genannte Problem dadurch gelöst, dass zwei Haltebügel vorgesehen sind, die im Abstand zueinander, jeweils auf einer Seite des Eimers angelenkt sind. Bei diesem Eimer kann zwar, da der Aufsatz nur auf einer Seite befestigt werden muss, die Eintauchöffnung für den Wischmopp größer gehalten werden, jedoch ist es nicht einfach, gerade den gefüllten Eimer mit einer Hand zu bedienen und es müssen natürlich zwei Haltebügel vorgesehen werden, damit der Eimer während des Tragens nicht kippt. Eine ähnlichen Behälter, hier als Tragkorb ausgebildet, zeigt die DE 29 707 094 U1, der allerdings ebenfalls zwei Haltebügel erfordert.

Aus der US 2 740 655 A ist ein Eimer bekannt, der eine zentrale Anlenkung eines Tragebügels aufweist, wobei der Tragebügel von der Drehachse zunächst nach Außen in Richtung des Eimerrandes geführt ist und erst nach einem gewissen seitlichen Versatz nach oben gerichtet ist. Dies schafft zwar Platz zum Eintauchen eines Wischgerätes, hat aber den Nachteil, dass sich der Eimer beim Hochheben schrägstellt, so dass die Gefahr des Überschwappens von Flüssigkeit besteht.

Aus der DE 10 2005 024 742 A1 ist ein Eimer nach dem Oberbegriff des unabhängigen Anspruchs 1 bekannt, der einen dezentral angelenkten Griff mit einem Pendelschutz in Form eines Stützelementes an der Anlenkung des Griffs aufweist. Ähnliche Eimer sind aus der DE 195 29 780 A1 und der US 2 740 655 A1 bekannt.
Aufgabe der Erfindung ist es daher, einen Eimer zu schaffen, der zum einen einfach getragen werden kann, darüber hinaus aber eine möglichst große Öffnung zum Einführen von Wischgeräten besitzt.

Diese Aufgabe wird nach der Erfindung durch einen Eimer nach Anspruch 1 gelöst.

Der erfindungsgemäße Eimer hat nun gegenüber den bekannten Eimern den Vorteil, dass der Haltebügel dezentral angeordnet werden kann, d.h. er kann auf eine Seite des Eimers verlagert werden, ohne dass dadurch ein Kippmoment auf den Behälter dergestaltwirken kann, dass sich der Behälter beim Anheben schräg stellt und so die Gefahr besteht, dass Wasser aus dem Behälter heraus schwappt.

Das durch den dezentralen Haltebügel entstehende Kippmoment wird erfindungsgemäß durch den Stützabschnitt aufgenommen. Hierzu weist der Haltebügel neben dem eigentlichen Tragebügel zumindest ein Stützelement auf. Dieses Stützelement ist derart am Behälterrand positioniert, dass die Enden des Tragebügels dezentral angeordnet sind, sich also außerhalb einer Linie befinden, die sich durch die Senkrechte, die wiederum durch den Schwerpunkt des befüllten Behälters verläuft, erstreckt. Grundsätzlich kann es dabei ausreichen, dass auf einer Seite ein Stützelement vorgesehen ist. Üblicherweise werden aber auf beiden Seiten des Behälters Stützelemente vorgesehen werden.

Die Stützelemente weisen zum Beispiel eine im Wesentlichen dreieckige Form auf und können aus Kunststoff gefertigt sein. Diese Elemente sind dann außerhalb des Mittelpunktes über eine gelenkige Verbindung mit dem Eimer, insbesondere einem nach außen umgeklappten Eimerrand verbunden. Dies kann eine übliche Verbindung über einen Zapfen und eine Aufnahmeöse sein.

Der Tragebügel ist mit seinen Enden drehfest mit den Stützelementen verbunden, hierzu kann eine Steckverbindung oder eine ähnliche Verbindung vorgesehen sein, wenn Stützelement und Tragebügel aus zwei verschiedenen Bauteilen gefertigt sind. Alternativ können die beiden Bauteile allerdings auch von einem gemeinsamen Kunststoffelement gebildet sein.

Die Stützelemente sind erfindungsgemäß mit ihrem Drehpunkt relativ zu der Achse, die parallel zu einer Achse, die rechtwinklig zu der senkrecht durch den Schwerpunkt verlaufenden Mittelachse des Behälters verläuft, in eine Versatzrichtung versetzt. Der Stützabschnitt erstreckt sich nun von der drehbaren Befestigung des Stützelementes in die, der Versatzrichtung entgegengesetzte Richtung zumindest soweit, dass er mit einer Stützstelle eine Kante oder einen sonstigen Widerlagerbereich, der fest mit dem Behälter verbunden ist oder von einer Formgebung der Behälterwandung gebildet ist, hintergreift, so dass die durch die dezentrale Anlenkung des Haltebügels entstehende Kippneigung unterdrückt werden kann.

Hierzu ist die Stützstelle zumindest soweit entgegen der Versatzrichtung angeordnet, dass sie sich auf der Linie befindet, die einerseits senkrecht durch die senkrecht durch den Schwerpunkt verlaufende Linie verläuft und andererseits parallel zur virtuellen Verbindung der beiden Anlenkpunkte des Haltebügels verläuft. Dies bedeutet, dass die Stützstelle das Kippmoment, das durch die dezentrale Anordnung der Anlenkpunkte entsteht, aufnehmen kann. Besonders bevorzugt ist dabei natürlich, dass auf beiden Seiten des Behälters jeweils wenigstens eine Stützstelle vorgesehen ist.

Bei einer bevorzugten Ausgestaltung der Erfindung wird sich der Stützabschnitt mit der oder den Stützstellen deutlich über die oben genannte Linie, die durch die senkrecht durch den Schwerpunkt verlaufende Linie verläuft, hinaus erstrecken. Je weiter diese Linie überschritten wird, desto effektiver ist die Aufnahme des Kippmomentes.

Die Stützelemente können aus Kunststoff oder Metall gefertigt sein und längs des Behälterrandes auch verschiebbar am Behälterrand befestigt sein, so dass der Benutzer sie bei Bedarf verlagern kann. Ist eine verschiebbare Lagerung vorgesehen oder soll das Stützelement über eine Klemmverbindung mit dem Rand fest verbunden werden, können Klemmmittel am Stützelement vorgesehen werden, die ein weiteres Verschieben, insbesondere durch die Gewichtskraft des Eimers verhindern.

Die Stützelemente untergreifen bevorzugt ein nach außen umbördelten Rand des Behälters. Hierzu können sie einen unteren, u-förmigen Rand aufweisen, der den Rand des Behälters untergreift. In diesem Rand des Stützelementes können dann die Klemmmittel vorgesehen sein, die entweder durch die Montagekraft oder durch die Gewichtskraft aktiviert werden.

Weitere Merkmale und Vorteile der Erfindung ergeben sich aus den Unteransprüchen und aus der nachfolgenden Beschreibung eines bevorzugten Ausführungsbeispiels anhand der Zeichnungen.

In den Zeichnungen zeigt:
- Fig. 1: einen erfindungsgemäßen Eimer und
- Fig. 2: den in Figur 1 dargestellten Eimer mit hochgeschwenktem Haltebügel .

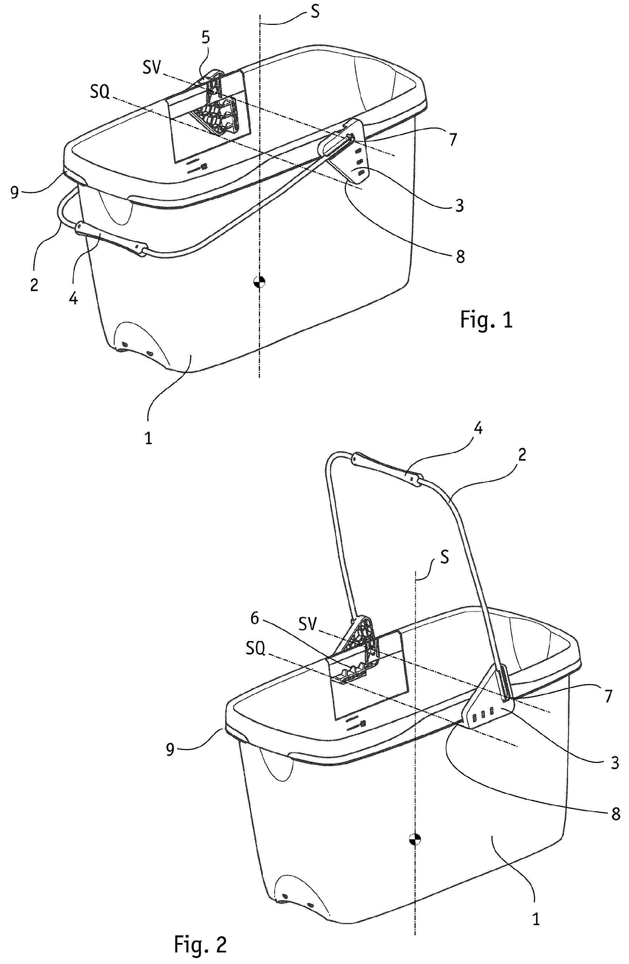

In Figur 1 ist eine erfindungsgemäße Ausgestaltung eines Eimers dargestellt. Der Eimer weist einen Behälter 1 auf, der einen oberen Behälterrand 9 besitzt. Dieser Behälterrand 9 wird von einem nach außen um 180° umgebogenen, oberen Randbereich des Behälters 1 gebildet.

Der Eimer kann über einen Haltebügel 2 in einer Hand gehalten und getragen werden. Der Haltebügel 2 weist im Wesentlichen einen in Form eines umgekehrten "U" ausgebildeten Tragbügel und an den freien Enden des Tragbügels jeweils ein Stützelement 3 auf. Jedes Stützelement 3 ist wiederum an dem Behälterrand 9 drehbar befestigt. In Figur 1 und Figur 2 ist jeweils die hintere Wand des Behälters 1 ausgeschnitten dargestellt, um die Befestigung des Stützelementes 3 an dem umgebogenen Behälterrand 9 besser darstellen zu können.

Das Stützelement 3 ist im rechten Bereich gelenkig mit dem Behälterrand 9 verbunden. Der Tragbügel, der hier aus Metall gefertigt ist, weist im oberen Bereich einen Griff 4 auf, der von zwei um den Metallbügel herum gelegten Griffschalen gebildet ist.

Die dargestellte Ausführungsform ist selbstverständlich nur beispielhaft, es können auch alle anderen Formen von Bügeln Verwendung finden, die auch mit den Stützelementen 3 nicht nur fest verbunden sein können, sondern die beiden bzw. drei Bauteile, nämlich Tragbügel einerseits und ein oder zwei Stützelemente 3 andererseits, können auch von einem gemeinsamen Bauteil gebildet sein.

Wichtig ist im Fall der hier dargestellten Ausführungsform, dass auf jeder Seite des Behälters 1 ein Stützelement 3 ein jeweils gegenüberliegenden Anlenkpunkten 7 drehbar befestigt ist, dass den sich bei nach unten geschwenktem Haltebügel 2 nach unten gerichteten Stützabschnitt aufweist. An diesem Stützabschnitt ist dann die Stützstelle 8 vorgesehen. Wird nun der Haltebügel 2 zum Tragen des Eimers nach oben geklappt, dreht sich auf einer virtuellen Kreisbahn das vordere Ende des Stützelementes 3 so lange, bis es den Behälterrand 9 untergreift und sich mit der Stützstelle 8 unter dem Behälterrand 9 abstützt.

In dieser Position kann dann über das Stützelement 3 nicht nur der Behälter 1 getragen werden, das Stützelement 3 kann ferner auch das Kippmoment aufnehmen, so dass der Behälter 1 trotz der die zentralen Lagerung des Haltebügels 2 gerade getragen werden kann. Ein weiterer Vorteil dieser Lagerung ist die Tatsache, dass ein Pendeln oder Aufschwingen des Eimers unterdrückt wird, da nunmehr mehrere, im Abstand zueinander angeordnete Abstützungen vorgesehen sind. Gleichzeitig wird ein zweiter Tragbügel vermieden.

Damit der erfindungsgemäße Effekt eintritt, sind die Anlenkpunkte 7 auf einer ersten virtuellen Linie SV angeordnet. Diese virtuelle Linie SV ist in der dargestellten Ausführungsform und Lage der Bauteile nach rechts und schräg hinten relativ zu einer Linie SQ versetzt. Die Linie SQ wiederum verläuft rechtwinklig zu einer Achse S, die wiederum senkrecht durch den Schwerpunkt des Behälters 1 verläuft. Der Schwerpunkt des Behälters 1 ist natürlich davon abhängig, wie stark der Behälter 1 gefüllt ist. In den Querrichtungen jedoch hat dies keinen Einfluss auf die Position des Schwerpunktes, er wandert lediglich längs der Linie S nach unten oder oben.

Um den Versatz der Anlenkpunkte 7 zu kompensieren, ist der sich in der Trageposition des Haltebügels 2 nach vorne, zumindest bis zur Linie SQ, aber bevorzugt über diese Linie SQ hinaus, erstreckende Stützabschnitt mit den Stützstellen 8 vorgesehen. Diese Stützstellen 8 können natürlich auch von der gesamten Oberfläche des Stützabschnitts gebildet sein.

Ein weiterer Vorteil des schwenkbaren Stützelementes 3 kann darin bestehen, dass dies über eine Rastverbindung in einer oder zwei Positionen vorübergehend festlegbare sein kann, so dass der Haltebügel 2 in diesen Positionen fest steht, bis der Benutzer eine ausreichend große Kraft aufbringt, um die Rastverbindung zu lösen.

So kann zum Beispiel in der Trageposition der aufgerichtete Haltebügel 2 durch eine Rastverbindung gehalten sein, die am Ende des Stützabschnitts mit dem Behälterrand 9 zusammenwirkt. In der Gebrauchsposition des Eimers wiederum kann im oberen Bereich des Stützelementes 3 eine solche Rastposition vorgesehen sein, die in der in Figur 1 dargestellten Orientierung des Stützelementes 3 dann vorne liegt und dort mit dem Behälterrand 9 zusammenwirkt.

### Bezugszeichenliste:

- 1: Behälter
- 2: Haltebügel
- 3: Stützelement
- 4: Griff
- 5: Verriegelungsdurchlass
- 6: Rutschhemmer
- 7: Anlenkpunkt
- 8: Stützstelle
- 9: Behälterrand

- S: Durch den Schwerpunkt des Behälters verlaufende senkrechte Achse
- SQ: Zur virtuellen Verbindungslinie parallele und durch die senkrechte Achse verlaufende Linie
- SV: Virtuelle Verbindungslinie der Anlenkpunkte

## Patentansprüche

1. Eimer (1) mit einer von einem Behälterrand (9) definierten oberen Öffnung und einem, an dem Behälterrand (9) an gegenüberliegenden Anlenkpunkten (7) schwenkbar befestigten, dezentralen Haltebügel (2) zum Tragen des Eimers (1), wobei die Anlenkpunkte (7) auf einer, von einem Anlenkpunkt (7) zum gegenüberliegenden Anlenkpunkt (7) verlaufenden, virtuellen Verbindungslinie (SV) liegen und der Haltebügel (2) an beiden Enden ein Stützelement (3) aufweist, das an dem Behälterrand (9) schwenkbar an den Anlenkpunkten (7) gelagert ist, **dadurch gekennzeichnet, dass**
die Anlenkpunkte (7) derart angeordnet sind, dass die virtuelle Verbindungslinie (SV) zu einer durch den Schwerpunkt des befüllten Behälters (1) verlaufenden senkrechten Achse (S) in eine Versatzrichtung versetzt angeordnet ist, und das Stützelement (3) einen entgegen der Versatzrichtung verlaufenden Stützabschnitt aufweist, der zumindest an einer Stützstelle (8) den Behälterrand (9) untergreift, wobei die Stützstelle (8) der beiden gegenüberliegenden Stützelemente (3) auf oder hinter einer, zu der virtuellen Verbindungslinie (SV) parallelen Linie (SQ) liegen, die durch die senkrechte Achse (S) verläuft und wobei der Haltebügel (2) drehfest am Stützelement (3) befestigt ist und das Stützelement (3) an dem Anlenkpunkt (7) drehbar am Behälter (1) gelagert ist.

2. Eimer nach Anspruch 1, **dadurch gekennzeichnet, dass** auf jeder Seite des Haltebügels (2) jeweils ein Stützelement (3) angeordnet ist, das eine Stützstelle (8) aufweist, die auf oder hinter der zur virtuellen Verbindungslinie (SV) parallelen, durch den Schwerpunkt des befüllten Behälters (1) verlaufenden Linie (SQ) liegen.

3. Eimer nach Anspruch 1, **dadurch gekennzeichnet, dass** auf nur einer Seite des Haltebügels (2) ein Stützelement (3) angeordnet ist, dass eine Stützstelle (8) aufweist, die hinter der zur virtuellen Verbindungslinie (SV) parallelen, durch den Schwerpunkt des befüllten Behälters (1) verlaufenden Linie (SQ) liegt.

4. Eimer nach einem der vorhergehenden Ansprüche, **dadurch gekennzeichnet, dass** der Behälterrand (9) einen nach außen hervorspringenden Randabschnitt aufweist, der sich zumindest vom Anlenkpunkt (7) bis zur Kontaktstelle mit der Stützstelle (8) erstreckt, wobei der Stützabschnitt den Behälterrand (9) vom Anlenkpunkt (7) bis zu der am vorderen Bereich des Stützelementes (3) angeordneten Stützstelle (8) untergreift.

5. Eimer nach einem der vorhergehenden Ansprüche, **dadurch gekennzeichnet, dass** der Haltebügel (2) von einer Gebrauchsposition des Eimers, in der der Haltebügel (2) nach unten geklapptist, in eine Trageposition schwenkbar ist, wobei das Stützelement (3) einen Verriegelungsdurchlass (5) aufweist, durch den eine Verriegelungsnase eines Eimeraufsatzes, insbesondere in Form eines Schleuderkorbes, durchführbar ist, und wobei der Verriegelungsdurchlass (5) in einer Stellung des Haltebügels (2) zwischen der Gebrauchsposition und der Trageposition oberhalb der Behälterrandes (9) liegt, so dass die Verriegelungsnase durchführbar und auf dem Behälterrand (9) positionierbar ist und das Stützelement (3) in der Gebrauchsposition und in der Trageposition mit einem angrenzenden Wandbereich die die Verriegelungsnase zur Befestigung des Eimeraufsatzes überdeckt.

6. Eimer nach einem der vorhergehenden Ansprüche, **dadurch gekennzeichnet, dass** der Behälter (1) oval oder rechteckig mit einer geradlinigen oder gebogenen Schmalseite und einer geradlinigen oder gebogenen Langseite ausgebildet ist, wobei die Anlenkpunkte (7) an den Schmalseiten angeordnet sind.

7. Eimer nach einem der Ansprüche 1 bis 5, **dadurch gekennzeichnet, dass** der Behälter (1) oval oder rechteckig mit einer geradlinigen oder gebogenen Schmalseite und einer geradlinigen oder gebogenen Langseite ausgebildet ist, wobei die Anlenkpunkte (7) an den Langseiten angeordnet sind.

8. Eimer nach einem der Ansprüche 1 bis 5, **dadurch gekennzeichnet, dass** der Behälter (1) rund ausgebildet ist, wobei die Anlenkpunkte (7) außerhalb einer durch den Durchmesser des Behälters (1) verlaufenden Linie angeordnet sind.

9. Eimer nach einem der vorhergehenden Ansprüche, **dadurch gekennzeichnet, dass** der Haltebügel (2) einen Metallbügel als Tragebügel aufweist.

10. Eimer nach dem vorhergehenden Anspruch, **dadurch gekennzeichnet, dass** der Metallbügel im Bereich des Stützelementes (3) in Richtung der zur virtuellen Verbindungslinie (SV) parallelen Linie (SQ) umgebogen ist und die umgebogenen Enden des Metallbügels sich bis in den entgegen der Versatzrichtung verlaufenden Stützabschnitt erstrecken.

11. Eimer nach dem vorhergehenden Anspruch, **dadurch gekennzeichnet, dass** die Enden des Metallbügels die Stützstellen (8) bilden.

12. Eimer nach einem der vorhergehenden Ansprüche, **dadurch gekennzeichnet, dass** das Stützelement (3) verschiebbar den Behälterrand (9) untergreift und durch die Gewichtskraft des Eimers aktivierte Rutschhemmer (6), insbesondere in Form von mit dem Behälterrand (9) verklemmenden Klemmrippen aufweist.

13. Eimer nach einem der vorhergehenden Ansprüche, **dadurch gekennzeichnet, dass** das Stützelement (3) aus Kunststoff gefertigt ist.

## Claims

1. A bucket (1) with a top opening defined by a container edge (9) and an off-centre bucket-handle (2) for the carrying of the bucket (1) attached in a pivoting manner to opposing pivot points (7) on the container edge (9),
wherein the pivot points (7) are disposed on a virtual connecting line (SV) extending from one pivot point (7) to the opposing pivot point (7), and the bucket handle (2) comprises a support element (3) at both ends, which is mounted in a pivoting manner in the pivot points (7) at the container edge (9), **characterised in that**
the pivot points (7) are arranged in such a manner that the virtual connecting line (SV) is arranged offset in an offset direction relative to a vertical axis (S) extending through the centre of gravity of the filled container (1), and the support element (3) comprises a support portion extending opposite to the offset direction, which engages under the container edge (9) at least in one support position (8),
wherein the support position (8) of the two opposing support elements (3) are disposed on or behind a line (SQ) parallel to the virtual connecting line (SV), which extends through the vertical axis (S)
and wherein the bucket-handle (2) is attached in a rotationally rigid manner to the support element (3), and the support element (3) is mounted on the container (1) in a rotatable manner at the pivot point (7).

2. The bucket according to claim 1, **characterised in that**, on each side of the bucket-handle (2), a support element (3), which comprises a support position (8), is arranged in each case, which are disposed on or behind the line (SQ) parallel to the virtual connecting line (SV) extending through the centre of gravity of the filled container (1).

3. The bucket according to claim 1, **characterised in that**, on only one side of the buckethandle (2), a support element (3) is arranged, which comprises a support position (8) which is disposed behind the line (SQ) parallel to the virtual connecting line (SV) extending through the centre of gravity of the filled container (1).

4. The bucket according to any one of the preceding claims, **characterised in that** the container edge (9) comprises an outwardly projecting edge portion which extends at least from the pivot point (7) to the contact position with the support position (8),
wherein the support portion engages under the container edge (9) from the pivot point (7) to the support position (8) arranged in the front region of the support element (3).

5. The bucket according to any one of the preceding claims, **characterised in that** the buckethandle (2) can be pivoted from a usage position of the bucket, in which the bucket-handle (2) is folded downwards, into a carrying position,
wherein the support element (3) comprises a locking channel (5), through which a locking pin of a bucket attachment, especially in the form of a wringer, can be guided,
and wherein the locking channel (5) is disposed above the container edge (9) at a position of the bucket-handle (2) between the usage position and the carrying position, so that the locking pin can be guided through and positioned on the container edge (9), and, in the usage position and in the carrying position, the support element (3) covers the locking pin for the mounting of the bucket attachment with an adjacent wall region.

6. The bucket according to any one of the preceding claims, **characterised in that** the container (1) is embodied to be oval or rectangular with a rectilinear or curved narrow side and a rectilinear or curved longitudinal side, wherein the pivot points (7) are arranged on the narrow sides.

7. The bucket according to any one of claims 1 to 5, **characterised in that** the container (1) is embodied to be oval or rectangular with a rectilinear or curved narrow side and a rectilinear or curved longitudinal side, wherein the pivot points (7) are arranged on the longitudinal sides.

8. The bucket according to any one of claims 1 to 5, **characterised in that** the container (1) is embodied to be round, wherein the pivot points (7) are arranged outside a line extending through the diameter of the container (1).

9. The bucket according to any one of the preceding claims, **characterised in that** the buckethandle (2) comprises a metal handle as carrying handle.

10. The bucket according to the preceding claim, **characterised in that** the metal handle is curved in the region of the support element (3) in the direction of the line (SQ) parallel to the virtual connecting line (SV), and the curved ends of the metal handle extend into the support portion extending opposite to the offset direction.

11. The bucket according to the preceding claim, **characterised in that** the ends of the metal handle form the support positions (8).

12. The bucket according to any one of the preceding claims, **characterised in that** the support element (3) engages in a displaceable manner under the container edge (9) and comprises antislip elements (6) activated by the weight of the bucket, especially in the form of gripping ribs engaging with the container edge (9).

13. The bucket according to any one of the preceding claims, **characterised in that** the support element (3) is manufactured from synthetic material.

## Revendications

1. Seau (1) avec une ouverture supérieure définie par un bord de récipient (9) et un étrier de maintien (2) décentralisé fixé de façon pivotante à des points d'articulation (7) de côté opposé sur le bord du récipient (9) de manière à porter le seau (1), sachant que les points d'articulation (7) se situent sur une ligne de raccordement (SV) virtuelle passant d'un point d'articulation (7) au point d'articulation (7) opposé et que l'étrier de maintien (2) présente un élément de support (3) aux deux extrémités qui est logé de façon pivotante aux points d'articulation (7) sur le bord du récipient (9), **caractérisé en ce que** les points d'articulation (7) sont agencés de telle manière que la ligne de raccordement (SV) virtuelle est disposée de façon décalée dans la direction de déplacement par rapport à un axe (S) perpendiculaire passant par le centre de gravité du récipient (1) rempli, et que l'élément de support (3) présente un segment de support passant dans le sens opposé de la direction de déplacement, ledit segment de support s'engageant au-dessous du bord du récipient (9) à un point d'appui (8) au moins, sachant que les points d'appui (8) des deux éléments de support (3) opposés sont disposés dessus ou derrière une ligne (SQ) parallèle à la ligne de raccordement (SV) virtuelle, qui passe par l'axe (S) perpendiculaire et sachant que l'étrier de maintien (2) est fixé de manière solidaire en rotation à l'élément de support (3) et que ledit élément de support (3) est logé de façon pivotante au point d'articulation (7) sur le récipient (1).

2. Seau selon la revendication 1, **caractérisé en ce que**, sur chaque côté de l'étrier de maintien (2), un élément de support (3) est disposé présentant un point d'appui (8) qui se trouve dessus ou derrière la ligne (SQ) parallèle à la ligne de raccordement (SV) virtuelle et passant par le centre de gravité du récipient (1) rempli.

3. Seau selon la revendication 1, **caractérisé en ce que**, sur un côté seulement de l'étrier de maintien (2), un élément de support (3) est disposé présentant un point d'appui (8) qui se trouve derrière la ligne (SQ) parallèle à la ligne de raccordement (SV) virtuelle et passant par le centre de gravité du récipient (1) rempli.

4. Seau selon l'une quelconque des revendications précédentes, **caractérisé en ce que** le bord du récipient (9) présente une section de bord faisant saillie vers l'extérieur, qui s'étend au moins du point d'articulation (7) jusqu'au point de contact avec le point d'appui (8), sachant que le segment de support s'engage au-dessous du bord du récipient (9) du point d'articulation (7) jusqu'au point d'appui (8) disposé sur la zone avant de l'élément de support (3).

5. Seau selon l'une quelconque des revendications précédentes, **caractérisé en ce que** l'étrier de maintien (2) pivote d'une position d'utilisation du seau dans laquelle ledit étrier de maintien (2) est rabattu vers le bas dans une position de transport, sachant que l'élément de support (3) présente un trou de verrouillage (5) à travers lequel une patte d'arrêt d'un dispositif de seau peut être passée, notamment sous la forme d'un panier d'essorage, et sachant que le trou de verrouillage (5) se trouve au-dessus du bord du récipient (9) en une position de l'étrier de maintien (2) entre la position d'utilisation et la position de transport, de sorte que la patte d'arrêt peut être passée et positionnée sur le bord du récipient (9) et que l'élément de support (3) recouvre la patte d'arrêt pour fixer le dispositif du seau avec une zone de paroi adjacente en position d'utilisation et en position de transport.

6. Seau selon l'une quelconque des revendications précédentes, **caractérisé en ce que** le récipient (1) est ovale ou rectangulaire avec un côté étroit courbé ou rectiligne et un côté longitudinal courbé ou rectiligne, sachant que les points d'articulation (7) sont disposés sur les côtés étroits.

7. Seau selon l'une quelconque des revendications 1 à 5, **caractérisé en ce que** le récipient (1) est ovale ou rectangulaire avec un côté étroit courbé ou rectiligne et un côté longitudinal courbé ou rectiligne, sachant que les points d'articulation (7) sont disposés sur les côtés longitudinaux.

8. Seau selon l'une quelconque des revendications 1 à 5, **caractérisé en ce que** le récipient (1) est rond, sachant que les points d'articulation (7) sont disposés en dehors d'une ligne passant par le diamètre du récipient (1).

9. Seau selon l'une quelconque des revendications précédentes, **caractérisé en ce que** l'étrier de maintien (2) est un étrier métallique pour servir de poignée de transport.

10. Seau selon la revendication précédente, **caractérisé en ce que** l'étrier métallique est recourbé dans la zone de l'élément de support (3) en direction de la ligne (SQ) parallèle à la ligne de raccordement (SV) virtuelle, et que les extrémités recourbées de l'étrier métallique s'étendent jusqu'au segment de support passant dans le sens opposé de la direction de déplacement.

11. Seau selon la revendication précédente, **caractérisé en ce que** les extrémités de l'étrier métallique forment des points d'appui (8).

12. Seau selon l'une quelconque des revendications précédentes, **caractérisé en ce que** l'élément de support (3) s'engage de façon coulissante au-dessous du bord du récipient (9) et présente des inhibiteurs de glisse (6) activés sous l'effet du poids du seau, inhibiteurs notamment sous la forme de nervures de blocage coinçant avec le bord du récipient (9).

13. Seau selon l'une quelconque des revendications précédentes, **caractérisé en ce que** l'élément de support (3) est fabriqué en matière plastique.
